(19) Europäisches Patentamt
European Patent Office
Office européen des brevets

(11) Veröffentlichungsnummer : **0 374 099 B1**

(12) **EUROPÄISCHE PATENTSCHRIFT**

(45) Veröffentlichungstag der Patentschrift :
**05.05.93 Patentblatt 93/18**

(51) Int. Cl.$^5$ : **C23C 18/30,** C07F 15/00

(21) Anmeldenummer : **89810924.4**

(22) Anmeldetag : **07.12.89**

# (54) Ultradünne Schichten aus Palladium(O)-Komplexen.

(30) Priorität : **16.12.88 CH 4662/88**

(43) Veröffentlichungstag der Anmeldung :
**20.06.90 Patentblatt 90/25**

(45) Bekanntmachung des Hinweises auf die Patenterteilung :
**05.05.93 Patentblatt 93/18**

(84) Benannte Vertragsstaaten :
**CH DE FR GB IT LI NL**

(56) Entgegenhaltungen :
**DE-A- 2 153 563**
**FR-A- 2 289 629**

(73) Patentinhaber : **CIBA-GEIGY AG**
**Klybeckstrasse 141**
**CH-4002 Basel (CH)**

(72) Erfinder : **Tieke, Bernd, Dr.**
**Bichof Neumann Strasse 4**
**W-8753 Obernburg (DE)**

**EP 0 374 099 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Mono- oder Multischichtsysteme enthaltend Palladium(O)-Komplexe, ein Verfahren zu deren Herstellung, ein Verfahren zur Aktivierung von Substratoberflächen enthaltend solche Mono-oder Multischichtsysteme sowie die Verwendung dieser Schichtsysteme als Sensormaterialien für die Wasserstoff-Detektion oder als katalytisch aktive Oberflächen für Hydrierungsreaktionen.

In der EP-A 125 617 wird ein Tetrakis-(triphenylphosphin)-Palladium(O)-Komplex beschrieben, der sich durch Wärme zersetzen lässt und Pd°-Metallfilme bildet.

Weitere Palladium(O)-Komplexe werden in Houben-Weyl "Methoden der organischen Chemie, 4. Auflage, Bd. XIII/9b, Metallorganische Verbindungen", S. 714/5, Verlag Georg Thieme, Stuttgart, 1984, erwähnt.

Aus der EP-A 233 145 sind dünne Polymerfilme bekannt, die einen Di-benzalaceton-Palladiumkomplex in gelöster Form enthalten, die durch Wärme für die stromlose Metallabscheidung aktivierbar sind. Allerdings betragen die geringsten möglichen Filmdicken hier ca. 1 µm.

Weiter ist in der US-PS 4 347 232 die Verwendung von Dibenzalaceton-Palladiumkomplexen, die in der organischen Phase eines Zweiphasensystems aus Wasser und organischem Lösungsmittel gelöst sind, als Katalysatoren für die Herstellung von Wasserstoffperoxid aus Wasserstoff und Sauerstoff beschrieben.

Die Verwendung von Dibenzalaceton-Palladiumkomplexen zur stromlosen Metallabscheidung ist aus der EP-A 190 998 und der EP-A 214 097 bekannt. In der FR-A-2 289 629 wird ein Verfahren zur Metallisierung von Substraten beschrieben bei dem ein Substrat mit einer Lösung eines Palladiumkomplexes entweder bei erhöhter Temperatur oder durch auschliessendes Trocknen und einer darauffolgenden Wärmebehandlung aktiviert und dann mi einem Metallisierungsbad behandelt wird.

Eine wichtige Voraussetzung zur Herstellung von Mono- und Multischichtsystemen nach der Langmuir-Blodgett (LB)-Technik ist erstens die Fähigkeit der Moleküle zur Ausbildung stabiler monomolekularer Filme auf der Wasseroberfläche und zweitens die Fähigkeit der Monoschicht, beim Ein-und/oder Austauchen fester Träger auf diese aufzuziehen.

Es wurde nun überraschend gefunden, dass gewisse Palladium(O)-Komplexe, die von ihrer Molekülstruktur her nicht den klassischen Amphiphilen mit hydrophober Alkylkette und hydrophiler Kopfgruppe entsprechen, allein und in Mischungen mit anderen amphiphilen Verbindungen stabile Monoschichten bilden, die auf Träger aufgezogen werden können.

Die vorliegende Erfindung betrifft Mono- oder Multischichtsysteme mit einer Dicke von einer oder mehreren Moleküllagen, die sich auf einem fester Träger befinden und einen 1,5-Diaryl-1,4-pentadien-3-on-Palladium(0) komplex enthalten.

Besonders geeignet für solche Mono- oder Multischichtsysteme sind Palladiumkomplexe der Formel I,

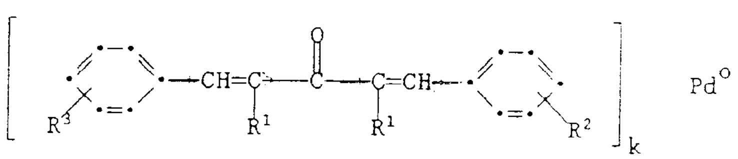 (I)

worin beide $R^1$ unabhängig voneinander Wasserstoff oder $C_1$-$C_4$ Alkyl oder die beiden Gruppen $R^1$ zusammen eine Polymethylenkette mit 2-4 C-Atomen bedeuten, $R^2$ Wasserstoff, $C_1$-$C_{22}$ Alkyl, $-N(R^4)_2$, $-NO_2$ oder -CN, $R^3$ $C_1$-$C_{22}$ Alkyl und $R^4$ $C_1$-$C_{22}$ Alkyl darstellen und k = 1-3,5 sind.

Als $C_1$-$C_4$ Alkyl bedeutet $R^1$ z.B. Methyl, Ethyl, n-Propyl, Isopropyl, n-Butyl, Isobutyl, sec.-Butyl oder tert.-Butyl.

Als $C_1$-$C_{20}$ Alkyl bedeuten $R^2$, $R^3$ und $R^4$ sowohl geradkettige wie auch verzweigte Alkylsubstituenten. Bevorzugt werden geradkettige Reste. Spezifische Beispiele für solche Alkylreste sind Methyl, Ethyl, n-Propyl, Isopropyl, n-Butyl, Isobutyl, n-Pentyl, n-Hexyl, n-Heptyl, n-Octyl, 2-Ethylhexyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl oder n-Eicosyl.

Bevorzugt sind Mono- oder Multischichtsysteme, die Komplexe der Formel I enthalten, worin $R^1$ Wasserstoff, $R^2$ $C_1$-$C_{12}$ Alkyl und $R^3$ $C_1$-$C_{12}$ Alkyl bedeuten.

Insbesondere bevorzugt sind Mono- oder Multischichtsysteme, die einen Komplex der Formel I enthalten worin $R^1$ Wasserstoff, und $R^2$ und $R^3$ je Isopropyl in p-Stellung bedeuten und k den Wert 2,5 aufweist.

Unter dem Begriff "Mono- oder Multischichtsystem" ist ganz allgemein jede Anordnung zu verstehen, welche die Komplexe der Formel I in Form einer dünnen Schicht oder einer Folge von dünnen Schichten enthält. Unter "dünner Schicht" ist im Rahmen dieser Beschreibung eine Schicht zu verstehen, welche die Dicke von einer oder mehreren Moleküllagen besitzt.

Vorzugsweise handelt es sich bei solchen Mono- oder Multischichtsystemen um eine monomolekulare Schicht oder eine Folge von monomolekularen Schichten enthaltend Komplexe der Formel I, die durch Uebertragung auf feste Träger nach dem Langmuir-Blodgett Verfahren (LB-Verfahren) erhältlich sind.

Die Komplexe der Formel I sind teilweise bekannt und lassen sich nach an sich bekannten Verfahren herstellen (vgl. z.B. J. Chem. Soc. D, 1970, 1065 und US-PS 4,347,232) indem man k Mol einer Verbindung der Formel II

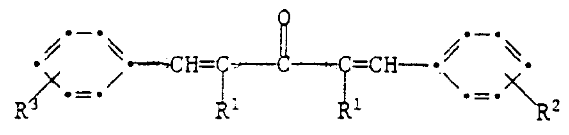

(II)

in Gegenwart einer Base und gegebenenfalls eines H-Donors mit einem löslichen Palladiumsalz umsetzt. Dabei haben $R^1$, $R^2$, $R^3$ und k die unter Formel I angegebene Bedeutung.

Als Basen können z.B. Alkalimetallsalze aliphatischer Monocarbonsäuren, besonders Kalium- und Natriumacetat, verwendet werden. Geeignete Palladiumsalze sind beispielsweise $PdBr_2$, $PdCl_2$ und $Na_2PdCl_4$. Besonders bevorzugt verwendet man $Na_2PdCl_4$ und vor allem $PdCl_2$. Die Umsetzung wird zweckmässig in einem organischen Lösungsmittel durchgeführt, das gleichzeitig auch als H-Donor fungiert. Dazu eignen sich z.B. Alkanole mit bis zu 6 C-Atomen, vor allem Ethanol und besonders bevorzugt Methanol.

Die Verbindungen der Formel II können auf an sich bekannte Weise hergestellt werden, beispielsweise analog dem in der US-PS 4,347,232 beschriebenen Verfahren.

Die Synthese der unsymmetrisch substituierten Dibenzalaceton-Derivate erfolgt nach bekannten Methoden wie z.B. Ber. dt. Chem. Ges. 14, 2471, (1881) und 46, 3813, (1913) in zwei Stufen:

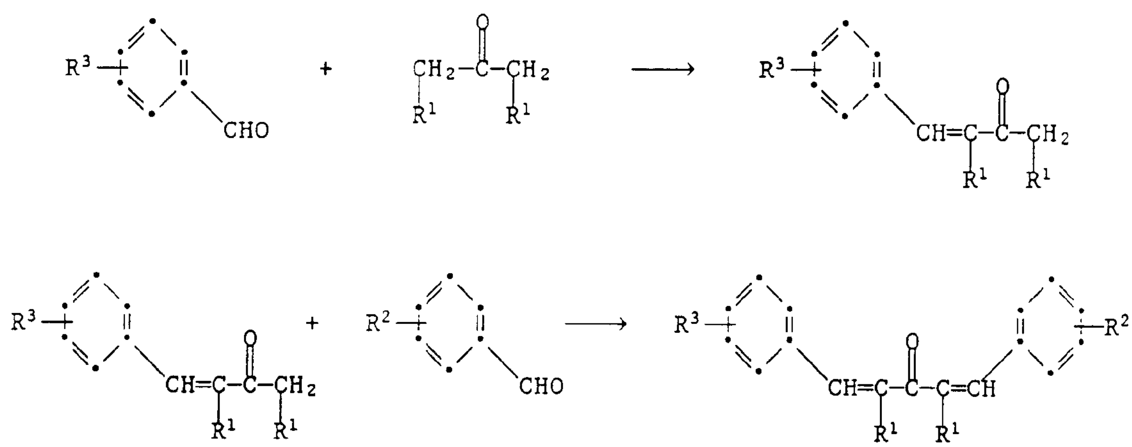

Aus den Komplexen der Formel I lassen sich überraschenderweise stabile monomolekulare Schichten an der Wasser/Gas-Grenzfläche herstellen. Dazu trägt man in an sich bekannter Weise eine geringe Menge einer Lösung eines Komplexes der Formel I in einem vorzugsweise niedrig siedenden und nicht mit Wasser mischbaren Lösungsmittel auf eine Wasseroberfläche auf, lässt das Lösungsmittel verdampfen und komprimiert den entstandenen Film, so dass eine stabile monomolekulare Schicht auf der Wasseroberfläche entsteht.

Die Subphase, auf der die monomolekulare Schicht ausgebildet wird, besteht in der Regel aus mehrfach destilliertem oder deionisiertem und filtriertem Wasser, dem gegebenenfalls zur Stabilisierung der Filme geringe Mengen von Salzen, beispielsweise $CdCl_2$ oder $BaCl_2$, zugesetzt sind. Ferner kann die Subphase Puffersubstanzen, beispielsweise $NaHCO_3$, enthalten. Diese Modifikationen sind dem Fachmann bekannt und werden, je nach der Art der filmbildenden Substanzen, ausgewählt.

Die Stabilität der Filme lässt sich bekanntermassen durch Wahl der experimentellen Parameter beeinflussen. So kann man beispielsweise relativ labile Filme aus Komplexen der Formel I durch Kühlen der Subphase stabilisieren oder man verwendet Komplexe der Formel I in Kombination mit anderen geeigneten amphiphilen Verbindungen, die monomolekulare Filme zu stabilisieren vermögen.

Bevorzugte amphiphile Verbindungen sind beispielsweise langkettige Fettsäuren wie z.B. Palmitinsäure, Stearinsäure, Arachinsäure, Behensäure oder Melissinsäure oder Ester dieser Fettsäuren, insbesondere die Methylester; langkettige Sulfonsäuren und Phosphonsäuren, deren Ester sowie langkettige Sulfate und Phosphate; langkettige Alkohole wie z.B. n-Pentadecanol, n-Octadecanol, n-Eicosanol oder n-Triacontanol; langkettige primäre Amine wie z.B. n-Hexadecylamin, n-Eicosylamin, n-Docosylamin oder n-Triacontylamin oder langkettige Amide wie z.B. Stearinsäureamid. Unter "langkettig" wird eine Kohlenstoffkette mit mindestens 12 C-Atomen, insbesondere mit 15-30 C-Atomen, verstanden.

Die Säuren werden bevorzugt in Form von Salzen, insbesondere Cd-Salzen eingesetzt.

Ferner sind langkettige aliphatische Kohlenwasserstoffe wie z.B. Hexadecan, Octadecan oder Eicosan sowie Polymere wie z.B. Polyoctadecylacrylat oder polymere Phthalocyaninatosiloxane ebenfalls zur Stabilisierung von monomolekularen Schichten geeignet.

Bevorzugte amphiphile Verbindungen zur Stabilisierung sind gesättigte oder ungesättigte Fettsäuren, deren Salze oder deren Ester.

Daher betrifft die vorliegende Erfindung auch Mono- oder Multischichtsysteme, die zusätzlich zu den Komplexen der Formel I eine stabilisierende amphiphile Komponente enthalten.

Die Komplexe der Formel I sind in der Regel zu mindestens 1 Gew.-%, bezogen auf die Gesamtmischung, in solchen Mischungen vorhanden.

Monomolekulare Filme enthaltend Komplexe der Formel I und gegebenenfalls weitere geeignete amphiphile Verbindungen lassen sich überraschenderweise nach dem LB-Verfahren gut von der Wasseroberfläche auf feste Träger übertragen. Dazu taucht man in an sich bekannter Weise einen festen Träger durch einen komprimierten, monomolekularen Film auf einer Wasseroberfläche und überträgt dadurch besagten Film auf den Träger.

Vorzugsweise enthalten solche Filme 5-100 Mol-%, insbesondere 20-100 Mol-%, an Komplexen der Formel I in Kombination mit weiteren, zur Stabilisierung von monomolekularen Filmen befähigten Komponenten wie z.B. amphiphilen Verbindungen.

Durch mehrmaliges Ein- und Austauchen lassen sich auf diese Weise Multischichtsysteme herstellen.

Die Schicht auf der Wasseroberfläche kann nach jedem Tauchvorgang ausgetauscht werden, so dass unterschiedliche Folgen von Schichten auf dem Träger herstellbar sind.

Die Verfahrensweisen zur Herstellung von Multischichten sind dem Fachmann auf dem Gebiet der LB-Systeme an sich bekannt und beispielsweise in "Techniques of Chemistry, Physical Methods of Chemistry, Vol. I, Part 3B, S. 666-671; Editor: "A. Weissberger & P. Rossiter" beschrieben.

Als feste Träger für das LB-Verfahren kommen unterschiedlichste hydrophile oder hydrophobe Substrate mit mikroskopisch planarer Oberfläche in Frage. Beispiele dafür sind Metalle, wie Aluminium oder Platin, Halbleiter wie Germanium oder Silizium, anorganische Materialien wie Glas, Quarz, ZnS oder $CaF_2$ oder Kunststoffe, wie Teflon®, Polymethylmethacrylat oder Epoxidharze. Man kann auch hydrophobierte Träger benutzen, beispielsweise Glas oder Quarz, das mit Silanen wie z.B. Trichlormethylsilan, Dichlordimethylsilan oder Trichloroctadecylsilan vorbehandelt oder mit einigen Schichten Cd-Arachidat vorbeschichtet wurde.

Ein wesentlicher Vorteil von solchen LB-Filmen gegenüber z.B. aus Lösungen aufgebrachten Filmen liegt darin, dass auch bei Dimensionen $\leq 1$ µm die Schichtdicke exakt kontrolliert und definiert ist.

Ein weiterer Gegenstand der Erfindung betrifft ein Verfahren zur Herstellung von Mono- oder Multischichtsystemen umfassend im wesentlichen die Schritte

i) Herstellung einer monomolekularen Schicht aus einem Komplex der Formel I oder einem Gemisch eines Komplexes der Formel I in Kombination mit weiteren zur Stabilisierung solcher Schichten befähigten amphiphilen Verbindungen und

ii) Uebertragung dieser Schicht auf einen festen Träger gemäss dem Langmuir-Blodgett Verfahren durch ein- oder mehrfaches Ein- und/oder Austauchen besagten Trägers durch die Schicht.

Vorzugsweise werden Mischschichten aus Komplexen der Formel I und Carbonsäuren oder deren Salzen oder Estern übertragen.

Durch Behandlung der Komplexe der Formel I in den Schichten auf den Substraten mit Wärme, insbesondere bei Temperaturen $\geqq 100°C$ lassen sich aus diesen Komplexen ultradünne homogene Schichten von katalytisch aktivem Pd° freisetzen.

Die gebildeten Pd°-Kluster sind katalytisch aktiv und katalysieren die stromlose Metallisierung (z.B. Vernicklung, Verkupferung) der Substrat-oberfläche, beispielsweise nach folgendem Schema:

$$H_2PO_2^- + Ni^{2+} + H_2O \xrightarrow{Pd^0} H_2PO_3^- + 2H^+ + Ni^0\downarrow$$

$$CH_2O + 3OH^- + Cu^{2+} \xrightarrow{Pd^0} HCO_2^- + 2H_2O + Cu^0\downarrow$$

Die Haftung des Metallfilms ist ausgezeichnet. Die stromlose Metallabscheidung kann mit an sich bekannten Metallisierungsbädern und nach üblichen Methoden erfolgen. Als Metalle eignen sich beispielsweise Kupfer, Nickel, Kobalt, Silber, Gold oder Zinn.

Daher betrifft die vorliegende Erfindung auch ein Verfahren zur Aktivierung von Substratoberflächen zur stromlosen Metallabscheidung umfassend die Schritte Herstellung einer monomolekularen Schicht eines Komplexes der Formel I und deren Uebertragung mittels Langmuir-Blodgett Verfahren auf einen Träger, wie oben definiert [Schritte i) und ii)] und daran anschliessend
iii) Erwärmung des Schichtsystems auf eine Temperatur ≧ 100°C, wobei sich der Komplex der Formel I zersetzt und eine ultradünne homogene Schicht aus katalytisch aktivem Pd° freigesetzt wird.

Die aktivierten ultradünnen homogenen Pd° Schichten können neben der Verwendung als aktive Substratoberflächen zur stromlosen Metallisierung auch a) als Sensormaterialien für die $H_2$-Detektion oder b) als katalytisch aktive Oberflächen für Hydrierungsverfahren eingesetzt werden, wobei in diesem Fall die Materialersparnis bei der Herstellung eine grosse Rolle spielt.

Beispiel 1: Herstellung des Tris-(p,p'-diisopropyldibenzalaceton)palladium-Komplexes (Komplex 1) gemäss US-PS 4,347,232, Spalte 5, Zeilen 37 ff.Es werden schwarzviolette Kristalle der Zusammensetzung 76,53 %C; 7,41 % H; 10,9 % Pd erhalten. Berechnete Zusammensetzung für $(p,p'\text{-Diisopropyldibenzalaceton})_{2,5}$ Pd: 76,55 % C; 7,21 % H; 11,8 % Pd.

Komplex 1 wird ohne Umkristallisation für die weiteren Beispiele verwendet.

Beispiel 2: Herstellung von monomolekularen Schichten aus Komplex 1 an der Gas/Wasser-Grenzfläche.

Zur Herstellung von Monoschichten auf der Gas/Wasser-Grenzfläche wird eine präparative Lauda-Filmwaage benutzt. Das benötigte hochreine Wasser wird frisch mit einer Milli-Q-Anlage der Firma Millipore hergestellt und ohne weitere Behandlung als Subphase verwendet. Der monomolekulare Film wird durch Auftropfen einer frischen Spreitlösung [Konzentration des Komplexes 1 in $CHCl_3$ (Merck-Uvasol) 1,0 mg/ml] auf die Wasseroberfläche nach Standardtechniken hergestellt. Nach dem Verdampfen des Lösungsmittels wird das Schub/Flächen-Diagramm registriert, wobei die Filmoberfläche um 12,3 $cm^2$/min vermindert wird. Die charakteristischen Daten der Monoschichten sind in der Tabelle 1 aufgelistet.

Beispiel 3: Herstellung von gemischten Monoschichten aus Komplex 1 und Cadmiumarachidat an der Gas/Wasser-Grenzfläche.

Zur Herstellung der Monoschichten wird wie unter Beispiel 2 verfahren. Als Spreitlösung wird eine gemeinsame Lösung von Komplex 1 und Arachinsäure im Molverhältnis 1:9 verwendet [Gesamtkonzentration der Amphiphilen in $CHCl_3$ (Merck-Uvasol) 1,0 mg/ml]. Als Subphase dient eine $3x10^{-4}$ molare wässrige $CdCl_2$-Lösung, die mit $NaHCO_3$ auf pH 6,4 eingestellt worden ist. Charakteristische Daten dieser Monoschichten sind in Tabelle 1 aufgelistet.

Beispiel 4: Herstellung von gemischten Monoschichten aus Komplex 1 und Sorbinsäureoctadecylester an der Gas/Wasser-Grenzfläche.

Zur Herstellung der Monoschichten wird wie unter Beispiel 2 verfahren. Als Spreitlösung wird eine gemeinsame Lösung von Komplex 1 und Sorbinsäureoctadecylester[1] im Molverhältnis 1:6 verwendet (Gesamtkonzentration der Amphiphilen in $CHCl_3$: 1,0 mg/ml). Charakteristische Daten dieser Monoschichten sind in der Tabelle 1 aufgelistet.

[1] Der Sorbinsäureoctadecylester wird analog B. Tieke, Colloid and Polymer Sci. 263 (1985) 965 hergestellt.

Tabelle 1

Charakteristische Daten der monomolekularen Schichten an der Gas/Wasser-Grenzfläche

| Beispiel Nr. | T [°C] | $\pi_c$* [mN/m] | $A_c$** [$nm^2$/Molekül] |
|---|---|---|---|
| 2 | 5,0 | 9 | 0,50 |
| 3 | 15,3 | 53 | 0,20 |
| 4 | 5,0 | 35 | 0,18 |

* $\pi_c$ = Filmdruck am Kollapspunkt;

** $A_c$ = Filmfläche am Kollapspunkt

Beispiel 5: Herstellung von Langmuir-Blodgett-Multischichten aus Komplex 1.

Es wird eine monomolekulare Schicht analog Beispiel 2 auf einer Subphase aus reinem Wasser bei 5°C gespreitet und bis zum Filmdruck $\pi$ = 7,5 mN/m komprimiert. Temperatur und Filmdruck sind so optimiert, dass die Monoschicht in einer stabilen, kondensierten Phase vorliegt. Anschliessend wird ein mit 3 Schichten Cadmiumarachidat vorbeschichteter Quarzträger (30x12x1 mm) senkrecht durch die Monoschicht in die Subphase ein - und wiederausgetaucht (Tauchgeschwindigkeiten $S_1$ bzw. $S_2$). Diese Prozedur wird noch mehrere Male wiederholt, wobei bei jedem Tauchvorgang eine Monoschicht übertragen wird und so die Multischicht aufgebaut wird. Die charakteristischen Daten sind in der Tabelle 2 aufgelistet.

Beispiel 6: Herstellung von gemischten Multischichten aus Komplex 1 und Cadmiumarachidat.

Es wird eine monomolekulare Schicht analog Beispiel 3 auf einer wässrigen $3x10^{-4}$ molaren Cadmiumchloridlösung gespreitet (pH 6,4, T = 15,4°C) und bis zum Filmdruck $\pi$ = 20mN/m komprimiert. Temperatur und Filmdruck sind so optimiert, dass die Monoschicht in einer stabilen, kondensierten Phase vorliegt. Nun wird ein mit Octadecyltrichlorsilan (Merck 98 %) hydrophobisierter Glasträger (76x26x1 mm) senkrecht durch die Monoschicht 10 mm tief in die Subphase ein- und wieder ausgetaucht. Diese Prozedur wird noch mehrfach wiederholt, wie in Beispiel 5 beschrieben. Die charakteristischen Daten der erhaltenen Multischicht sind in der Tabelle 2 aufgelistet.

Beispiel 7: Herstellung von gemischten Multischichten aus Komplex 1 und Sorbinsäureoctadecylester.

Es wird eine monomolekulare Schicht analog dem Beispiel 4 auf reinem Wasser bei 8°C gespreitet und bis zum Filmdruck $\pi$ = 10 mN/m komprimiert. Temperatur und Filmdruck sind so optimiert, dass die Monoschicht in einer stabilen, kondensierten Phase vorliegt. Nun wird ein mit 3 Schichten Cadmiumarachidat vorbeschichtetes Quarzplättchen (30x12xlmm) senkrecht durch die Monoschicht in die Subphase ein- und wieder ausgetaucht. Diese Prozedur wird noch mehrfach wiederholt, wie in Beispiel 5 beschrieben. Die charakteristischen Daten der erhaltenen Multischicht sind in der Tabelle 2 aufgelistet.

Tabelle 2

Charakteristische Daten der LB-Filme

| Bei-spiel Nr. | Tauch-geschw. [cm/min] $S_1(\downarrow)$ | $S_2(\uparrow)$ | Zahl der übertragenen Schichten | $\lambda_{max}$ [nm] | $OD_{\lambda_{max}}$ pro Schicht | $d_{001}$* [nm] |
|---|---|---|---|---|---|---|
| 5 | 2,4 | 1,9 | 6 | 540<br>335 | $5,8x10^{-3}$<br>$3,1x10^{-2}$ | |
| 5 | 2,4 | 1,9 | 14 | 540<br>335 | $6,1x10^{-3}$<br>$3,0x10^{-2}$ | |
| 5 | 2,4 | 1,9 | 80 | 540<br>335 | $3,6x10^{-3}$<br>$1,6x10^{-2}$ | 5,45 |
| 6 | 4,8 | 1,9 | 24 | 540<br>320 | $1,4x10^{-3}$<br>$7,6x10^{-3}$ | |
| 7 | 4,8 | 1,9 | 60 | 540<br>320 | $2,3x10^{-3}$<br>$9,6x10^{-3}$ | |

* röntgenographisch ermittelt (Philips-Pulverdiffraktometer)

<u>Beispiel 8:</u> Verwendung der mit LB-Filmen aus Komplex 1 beschichteten Substrate zur stromlosen Metallisierung.

a) Ein nach Beispiel 5 beschichtetes Quarzsubstrat (30 Schichten des Komplexes 1) wird 5 min auf 180°C erwärmt und anschliessend in ein Bad zur stromlosen Nickelabscheidung[2] getaucht. Nach ca. 30 Minuten hat sich ein lichtundurchlässiger Nickelüberzug auf dem Substrat gebildet.

b) Es wird ein mit 14 Schichten des Komplexes 1 beschichtetes Quarzsubstrat verwendet und 10 min auf 160°C erwärmt. Nach ca. 30minütigem Eintauchen in das Abscheidungsbad hat sich auch hier ein lichtundurchlässiger Nickelüberzug gebildet.

**Patentansprüche**

1. Mono- oder Multischichtsysteme mit einer Dicke von einer oder mehreren monomolekularen Lagen, die sich auf einem festen Träger befinden und einen 1,5-Diaryl-1,4-pentadien-3-on-Palladium(O)-Komplex enthalten.

2. Mono- oder Multischichtsysteme gemäss Anspruch 1, worin der Palladiumkomplex,ein Komplex der Formel I ist,

[2] Dabei handelt es sich um ein handelsübliches Abscheidungsbad für die stromlose Vernickelung mit der folgenden Zusammensetzung entsprechend J. Appl. Electrochem., 1(1971), 167:
30 g/l $NiCl_2 \cdot 6H_2O$
10 g/l $NaH_2PO_2 \cdot H_2O$
50 g/l $NH_4Cl$
82,4 g/l Natriumcitrat$\cdot 2H_2O$
Der pH des Bades wird mit konz. $NH_4OH$ auf 9 eingestellt.
Die Arbeitstemperatur beträgt 90°C.

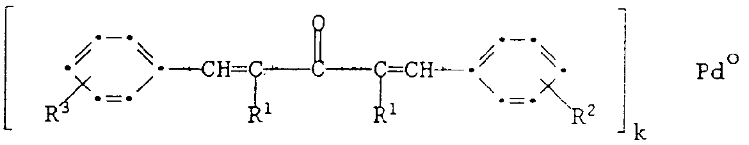

(I)

worin beide $R^1$ unabhängig voneinander Wasserstoff oder $C_1$-$C_4$ Alkyl oder die beiden Gruppen $R^1$ zusammen eine Polymethylenkette mit 2-4 C-Atomen bedeuten, $R^2$ Wasserstoff, $C_1$-$C_{22}$ Alkyl, $-N(R^4)_2$, $-NO_2$ oder -CN, $R^3$ $C_1$-$C_{22}$ Alkyl und $R^4$ $C_1$-$C_{22}$ Alkyl darstellen und k = 1-3,5 sind.

3. Mono- oder Multischichtsysteme gemäss Anspruch 2, worin in der Formel I $R^1$ Wasserstoff, $R^2$ $C_1$-$C_{12}$ Alkyl und $R^3$ $C_1$-$C_{12}$ Alkyl bedeuten.

4. Mono- oder Multischichtsysteme gemäss Anspruch 2, worin $R^1$ Wasserstoff, $R^2$ und $R^3$ je Isopropyl in p-Stellung bedeuten und k den Wert 2,5 aufweist.

5. Mono- oder Multischichtsysteme gemäss Anspruch 2, die zusätzlich zu den Komplexen der Formel I eine monomolekulare Filme stabilisierende amphiphile Komponente enthalten.

6. Mono- oder Multischichtsysteme gemäss Anspruch 5, worin die stabilisierende amphiphile Komponente eine gesättigte oder ungesättigte Fettsäure, ein Fettsäuresalz oder einen Fettsäureester darstellt.

7. Mono- oder Multischichtsysteme gemäss Anspruch 5, worin der Anteil an Komplexen der Formel I in Kombination mit einer stabilisierenden Komponente 5-100 Mol-% beträgt.

8. Verfahren zur Herstellung von Mono- oder Multischichtsystemen umfassend die Schritte
   i) Herstellung einer monomolekularen Schicht aus einem Komplex der Formel I oder einem Gemisch eines Komplexes der Formel I in Kombination mit weiteren zur Stabilisierung solcher Schichten befähigten amphiphilen Verbindungen und
   ii) Uebertragung dieser Schicht auf einen festen Träger gemäss dem Langmuir-Blodgett Verfahren durch ein- oder mehrfaches Ein- und/oder Austauchen besagten Irägers durch die Schicht.

9. Verfahren zur Aktivierung von Substratoberflächen zur stromlosen Metallabscheidung umfassend die Schritte
   i) Herstellung einer monomolekularen Schicht aus einem Komplex der Formel I oder einem Gemisch eines Komplexes der Formel I in Kombination mit weiteren zur Stabilisierung solcher Schichten befähigten amphiphilen Verbindungen und
   ii) Uebertragung dieser Schicht auf einen festen Träger gemäss dem Langmuir-Blodgett Verfahren durch ein- oder mehrfaches Ein- und/oder Austauchen besagten Irägers durch die Schicht,
   iii) Erwärmung des Schichtsystems auf eine Temperatur $\geqq$ 100°C, wobei sich der Komplex der Formel I zersetzt und eine ultradünne homogene Schicht aus katalytisch aktivem Pd° freigesetzt wird.

10. Verwendung der gemäss Anspruch 8 aktivierten Mono- oder Multischichtsysteme als Sensormaterialien für die $H_2$-Detektion oder als katalytisch aktive Oberflächen für Hydrierungsverfahren.

## Claims

1. A monolayer or multilayer system having a thickness of one or more monomolecular layers, which is located on a solid substrate and contains a 1,5-diarylpenta-1,4-dien-3-one-palladium(0) complex.

2. A monolayer or multilayer system according to claim 1, in which the palladium complex is a complex of formula I

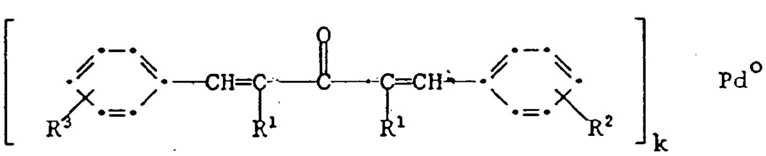

(I)

in which both the groups $R^1$ independently of the other are hydrogen or $C_1$-$C_4$alkyl or both the groups $R^1$ together are a polymethylene chain containing 2-4 C atoms, $R^2$ is hydrogen, $C_1$-$C_{22}$alkyl, -$N(R^4)_2$, -$NO_2$ or -CN, $R^3$ is $C_1$-$C_{22}$alkyl, $R^4$ is $C_1$-$C_{22}$alkyl and k = 1-3.5.

3. A monolayer or multilayer system according to claim 2, in which in formula I, $R^1$ is hydrogen, $R^2$ is $C_1$-$C_{12}$alkyl and $R^3$ is $C_1$-$C_{12}$alkyl.

4. A monolayer or multilayer system according to claim 2, in which $R^1$ is hydrogen, $R^2$ and $R^3$ are each isopropyl in the p-position and k has the value 2.5.

5. A monolayer or multilayer system according to claim 2, which contains an amphiphilic component which stabilizes mononuclear films, in addition to the complexes of formula I.

6. A monolayer or multilayer system according to claim 5, in which the amphiphilic stabilizing component is a saturated or unsaturated fatty acid, a fatty acid salt or a fatty acid ester.

7. A monolayer or multilayer system according to claim 5, in which the proportion of the complexes of formula I in conjunction with a stabilizing component is 5-100 mol%.

8. A process for the preparation of a monolayer or multilayer system which comprises the following steps of:
   i) preparing a monomolecular layer of a complex of formula I or a mixture of a complex of formula I with other amphiphilic compounds which are capable of stabilizing such layers, and
   ii) transferring said layer to a solid substrate by the Langmuir-Blodgett technique by single or repeated immersion and/or withdrawal of said substrate through the layer.

9. A process for the activation of a substrate surface for electroless metal deposition which comprises the steps of:
   i) preparing a monomolecular layer of a complex of formula I or a mixture of a complex of formula I with other amphiphilic compounds which are capable of stabilizing such layers,
   ii) transferring said layer to a solid substrate by the Langmuir-Blodgett technique by single or repeated immersion and/or withdrawal of said substrate through the layer, and
   iii) heating the layer system to a temperature $\geqq 100°C$, whereupon the complex of formula I decomposes and an ultrathin homogeneous layer of catalytically active $Pd^0$ is produced.

10. Use of a monolayer or multilayer system activated according to claim 8 as sensor material for $H_2$ detection or as catalytically active surface for hydrogenation processes.

## Revendications

1. Systèmes mono- ou multicouches avec une épaisseur d'une ou de plusieurs couches monomoléculaires qui sont sur un support solide et qui contiennent un complexe de 1,5-diaryl-1,4-pentadiène-3-one et de palladium de valence 0.

2. Systèmes mono- ou multicouches selon la revendication 1 dans lesquels le complexe de palladium est un complexe de formule I ci-dessous :

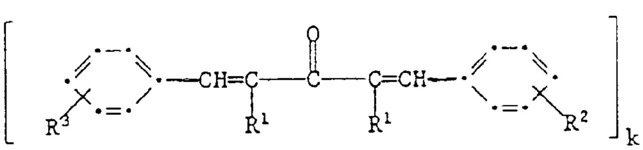

$Pd^0$ (I)

dans laquelle les deux $R^1$ représentent chacun, indépendamment l'un de l'autre, l'hydrogène ou un alkyle en $C_1$-$C_4$, ou bien forment ensemble une chaîne polyméthylène de 2 à 4 atomes de carbone, $R^2$ représente l'hydrogène, un alkyle en $C_1$-$C_{22}$ ou un groupe -$N(R^4)_2$, -$NO_2$ ou -CN, $R^3$ un alkyle en $C_1$-$C_{22}$ et $R^4$ également un alkyle en $C_1$-$C_{22}$, et k un nombre de 1 à 3,5.

**3.** Systèmes selon la revendication 2 pour lesquels, dans la formule I, $R^1$ désigne l'hydrogène, $R^2$ un alkyle en $C_1$-$C_{12}$ et $R^3$ également un alkyle en $C_1$-$C_{12}$.

**4.** Systèmes selon la revendication 2 pour lesquels $R^1$ est l'hydrogène, $R^2$ et $R^3$ sont chacun le groupe isopropyle à la position para et k est le nombre 2,5.

**5.** Systèmes selon la revendication 2 qui comprennent en outre une pellicule monomoléculaire d'un composant amphiphile stabilisant.

**6.** Systèmes selon la revendication 5 dont le composant amphiphile stabilisant est un acide gras saturé ou insaturé ou un sel ou ester de cet acide.

**7.** Systèmes selon la revendication 5 dans lesquels la proportion des complexes de formule I associés à un composant stabilisant est de 5 à 100 mol %.

**8.** Procédé de formation de systèmes mono- ou multicouches qui comprend les opérations suivantes :
1) on forme une couche monomoléculaire d'un complexe de formule I selon la revendication 2 ou d'un mélange de ce complexe et d'autres composés amphiphiles pouvant stabiliser de telles couches, et
2) on transfère cette couche sur un support solide suivant le procédé de Langmuir-Blodgett par une ou plusieurs immersions du support suivies d'un retrait à travers la couche.

**9.** Procédé d'activation de surfaces de substrats pour le dépôt non-galvanique de métaux, procédé qui comprend les opérations suivantes :
1) on forme une couche monomoléculaire d'un complexe de formule I selon la revendication 2 ou d'un mélange de ce complexe et d'autres composés amphiphiles pouvant stabiliser de telles couches,
2) on transfère cette couche sur un support solide suivant le procédé de Langmuir-Blodgett par une ou plusieurs immersions et/ou retraits du support à travers la couche, et
3) on chauffe l'ensemble des couches transférées à une température de 100 °C ou plus, ce qui décompose le complexe de formule I et libère une couche homogène ultramince de palladium catalytique de valence 0.

**10.** Emploi des systèmes mono- ou multicouches activés de la revendication 9 comme matériaux capteurs détecteurs pour déceler la présence d'hydrogène ou comme surfaces catalytiques pour des réactions d'hydrogénation.